Europäisches Patentamt

European Patent Office

Office européen des brevets

(19)

(11) Numéro de publication: **0 037 302**

**A1**

# (12) DEMANDE DE BREVET EUROPEEN

(21) Numéro de dépôt: **81400395.0**

(22) Date de dépôt: **13.03.81**

(51) Int. Cl.³: **G 01 S 7/62**
**G 06 F 13/00**

(30) Priorité: **28.03.80 FR 8007017**

(43) Date de publication de la demande:
**07.10.81 Bulletin 81/40**

(84) Etats contractants désignés:
**AT BE CH DE GB IT LI NL SE**

(71) Demandeur: **CGR ULTRASONIC**
**9, rue Chaussée de Paris**
**F-77102 Villenoy-les-Meaux(FR)**

(72) Inventeur: **Dory, Jacques**
**THOMSON-CSF SCPI 173, bld Haussmann**
**F-75360 Paris Cedex 08(FR)**

(74) Mandataire: **Dubreuil, Annie et al,**
**"THOMSON-CSF" - SCPI 173, bld Haussmann**
**F-75360 Paris Cedex 08(FR)**

(54) **Dispositif de traitement et de mémorisation numérique et échographe à balayage comportant un tel dispositif.**

(57) Dispositif de traitement de mémorisation numérique comprenant une mémoire principale (10) et une mémoire tampon (11). L'information résulte d'une exploration effectuée au moyen d'un balayage par lignes et chaque ligne, repérée par un numéro, est inscrite en mémoire tampon. Cette dernière est vidée dans la mémoire principale avant l'arrivée de la ligne suivante. La mémoire principale fonctionne en écriture et lecture soit alternées soit simultanées, la cadence de lecture étant plus élevée que la cadence d'écriture.

Application à l'échographie par ultrasons.

EP 0 037 302 A1

./...

Fig.1

1

## DISPOSITIF DE TRAITEMENT ET DE MEMORISATION NUMERIQUE ET ECHOGRAPHE A BALAYAGE COMPORTANT UN TEL DISPOSITIF

L'invention se rapporte principalement à l'examen de structures et, en particulier, de structures mobiles par échographie ultrasonore, avec balayage mécanique ou électronique séquentiel.

On sait que la cadence maximum d'émission des impulsions ultrasonores utilisable en échographie est de l'ordre de quelques centaines de KHz pour une distance parcourue par les ultrasons dans le milieu examiné égale à 1 mm, ce qui conduit à utiliser une fréquence de quelques KHz, par exemple, en échographie médicale.

Le faisceau d'examen balaye généralement le milieu examiné par lignes successives synchronisées sur les impulsions d'émission, si bien que la vitesse de balayage se trouve en pratique limitée à un millier de lignes par seconde environ, soit, par exemple, une dizaine d'images d'une centaine de lignes chacune. Il serait alors souhaitable, pour éviter que l'image visualisée sur tube cathodique ne scintille et ne soit difficile à observer, de pouvoir effectuer une mise en mémoire tampon de l'information correspondant aux échos, et une lecture à cadence plus élevée que l'écriture (par exemple cinq fois plus élevée), la mémoire comportant avantageusement un rafraîchissement permettant à l'information écrite d'être disponible pour la lecture pendant tout l'intervalle séparant l'écriture de deux lignes successives.

Les solutions connues faisant appel, pour résoudre ce problème, à un tube à mémoire à deux canons, sont peu pratiques et très onéreuses, en particulier, du fait que l'écriture d'une ligne nécessite l'effacement de l'information qui s'y trouve, et que le passage

2

du mode de lecture au mode écriture exige une modification sensible des tensions d'électrodes, ce qui entraîne une modification de la sensibilité de déflexion, donc une rotation du faisceau.

De plus, le mode d'acquisition des données analogiques comporte une certaine mobilité du plan d'examen. Il peut être souhaité en cours d'examen de figer l'image dans un plan particulier en chargeant, en temps réel, une mémoire appelée à débiter sur la visualisation.

On proposé d'utiliser comme tampon, des mémoires numériques classiques à matrice carrée et d'inscrire l'information numérique correspondant aux différents points de chacune des lignes explorées à des adresses de mémoire qui correspondent aux coordonnées rectangulaires de ces points, la lecture de la mémoire s'effectuant ensuite séquentiellement ligne par ligne. Outre la complexité des calculs de coordonnées qu'elle nécessite, cette solution exige l'emploi de mémoires encombrantes et onéreuses, si l'on veut obtenir une résolution satisfaisante. En effet, la ligne de balayage n'étant généralement pas parallèle aux lignes ou aux colonnes de la matrice, (en particulier dans le cas d'un balayage sectoriel), l'information correspondant à chaque point est répartie entre au moins deux cellules de la mémoire. En outre, lorsque le balayage est rapide et les lignes relativement espacées, il se produit des décalages d'un balayage au suivant et chaque inscription n'efface pas complètement la précédente.

L'invention propose de pallier cet inconvénient au moyen d'un dispositif de traitement et de mémorisation numérique qui comporte des moyens de codage d'une information acquise par un balayage par lignes successives dans un plan d'examen, échantillonnées chacune en un nombre prédéterminé de points, des moyens de mémorisation de la dite information, des moyens de commande et d'adressage et des moyens de visualisation, et qui est caractérisé en ce que les moyens de commande et d'adressage assurent un transfert par ligne de l'information des moyens d'acquisition aux moyens de mémorisation, chaque ligne étant sélectionnée par des moyens de repérage qui coopèrent avec les moyens de commande et d'adressage pour exploiter l'information vers les moyens de visualisation.

Suivant un mode d'exécution préféré, le dispositif comporte une mémoire tampon auxiliaire de capacité égale à la quantité d'information qui correspond à une ligne d'exploration, des moyens d'inscrire les lignes successives à cadence régulière dans la mémoire tampon et des moyens de commander l'écriture et la lecture alternées en mémoire principale, en dehors des périodes d'écriture en mémoire tampon.

De préférence, la lecture en mémoire principale s'effectue à cadence plus élevée que l'écriture.

Les lectures et écritures sont réalisées à des cadences différentes. En effet, le dispositif selon l'invention comporte deux voies distinctes reliées aux moyens de commande et d'adressage, la première voie ou voie d'inscription des données provenant chacune d'un point échantillonné sur une ligne du plan d'examen, fonctionne plus lentement que la seconde voie de sortie des données vers les moyens de visualisation. Cette structure permet avantageusement de lire la mémoire principale pendant que l'on écrit la mémoire tampon.

D'autres particularités, ainsi que les avantages de l'invention, apparaîtront clairement à la lumière

4

de la description ci-après, illustrée par les figures annexées où :

La figure 1 est le schéma de principe d'un appareil d'échographie faisant application d'un dispositif de mémorisation conforme au mode d'exécution préféré de l'invention ;

La figure 2 représente les formes d'ondes en différents points du schéma de la figure 1, et

La figure 3 illustre une variante.

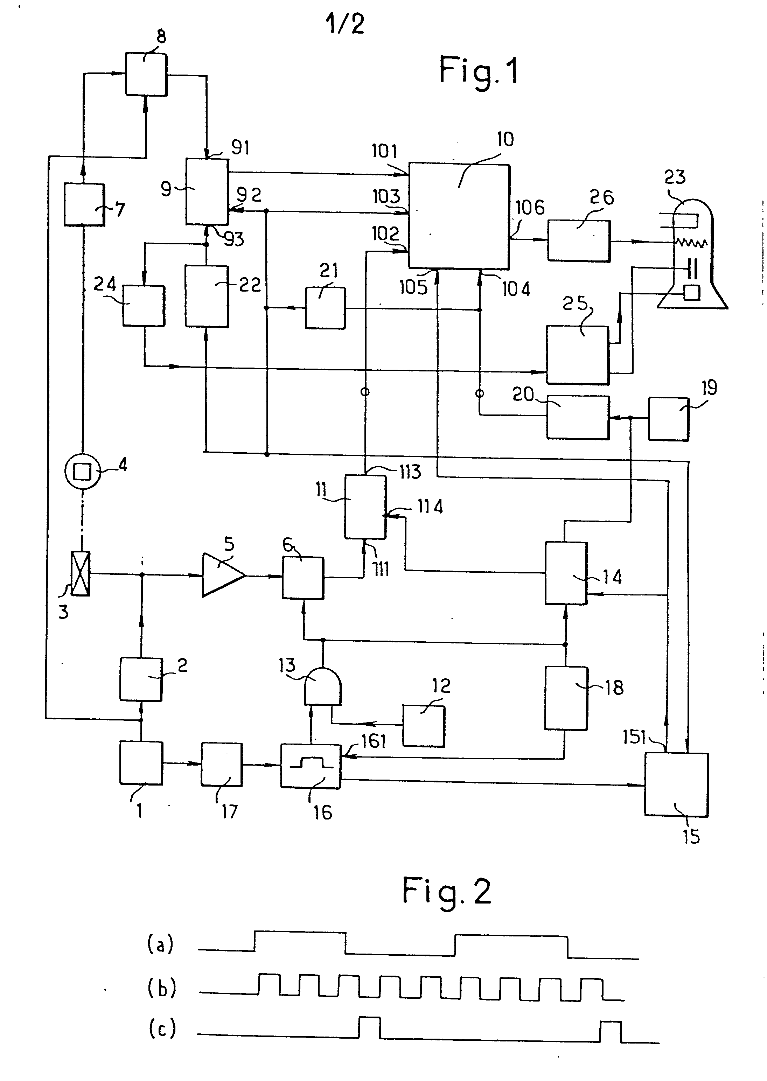

A la figure 1, on a représenté un exemple particulier de réalisation d'un échographe comportant un dispositif selon l'invention. Un tel appareil comporte un générateur 1 d'impulsions électriques récurrentes, c'est-à-dire répétées au cours du temps à une fréquence caractéristique. Ce générateur 1 module un émetteur à haute fréquence 2, lequel excite un transducteur ultrasonore émetteur-récepteur 3.

Les différents signaux sont alors fournis sous forme analogique à un dispositif de traitement et de mémorisation numérique selon l'invention. Un tel dispositif comporte d'abord des moyens d'acquisition des données numériques à mémoriser puis à visualiser. Ces moyens sont constitués en particulier par des moyens de focalisation du faisceau ultrasonore, en particulier pour réaliser un balayage électronique et/ou manuel du faisceau afin d'interroger un domaine prédéterminé dans une série de plans d'examen successifs.

De tels moyens sont par exemple du type décrit dans la demande de brevet français n° 77 35200 déposée le 23 novembre 1977 pour : "Appareil d'échographie médicale à balayage sectoriel de grande ouverture angulaire".

Un détecteur 7 fait partie de ces moyens et fournit un signal analogique indicatif de la position angulaire du faisceau.

Les échos obtenus par réflexion du faisceau sur des obstacles dans le milieu examiné sont transmis à un amplificateur 5 et convertis en valeurs numériques par un convertisseur analogique-numérique rapide 6.

A chaque émission, le faisceau ultrasonore subit un certain déplacement angulaire élémentaire. Dans le mode d'exécution décrit, le fasceau explore, dans chaque sens de balayage, la totalité du secteur angulaire balayé en 128 cycles d'émission. Mais le balayage pourrait obéir à une loi quelconque, le balayage sectoriel régulier étant toutefois un cas d'application intéressant de l'invention.

Chaque déplacement angulaire élémentaire définit une ligne d'exploration. Lorsque le secteur angulaire total est de 64°, la ligne correspond, à titre d'exemple, à un déplacement angulaire de 1/2°. A titre d'exemple, chaque cycle dure 500 $\mu$s, si bien qu'un balayage complet dure 64 x 2ms. La fréquence d'impulsions correspondante (2KHz) est compatible avec l'exploration d'un tissu organique jusqu'à des distances d'une trentaine de centimètres à partir du transducteur.

Un convertisseur analogique-numérique 8 déclenché à chaque émission par le signal de synchronisation fourni par le générateur 1, fournit un signal numérique de valeur comprise entre 1 et 128 qui exprime le rang de la ligne ainsi explorée. La valeur de l'angle mesuré par le détecteur 7, est gardée en mémoire jusqu'à l'impulsion d'émission suivante.

Ce signal numérique attaque un commutateur d'adresses 9 (entrée 91) dont la sortie est reliée

6

à une entrée 101 d'une mémoire principale 10. Celle-ci est du type à accès aléatoire et l'écriture s'effectue suivant 128 lignes, adressées par un signal issu du commutateur d'adresses 9. A titre d'exemple, la mémoire 10 est du type RAM. On pourrait également utiliser une mémoire comportant des registres à décalage. La mémoire 10 peut avantageusement comporter une pluralité de mémoires RAM de façon à reproduire des cellules de mémoire en correspondance avec un réseau bidimensionnel.

L'information est introduite à une entrée de données 102 de la mémoire 10 et provient d'une mémoire tampon 11. Celle-ci est un registre à décalage organisé pour stocker les informations provenant d'une ligne d'exploration. Elle comporte, à titre d'exemple, 128 points ayant chacun une capacité de 4 bits. Le convertisseur 6 échantillonne en effet le signal correspondant à un cycle d'exploration en 128 points correspondant chacun à une tabhe définie par un niveau de gris classé dans une échelle de 16, donc exprimable par 4 bits.

L'écriture dans la mémoire tampon par l'entrée 111, et le transfert du contenu de la mémoire tampon dans la mémoire principale de la sortie 113 à l'entrée 102, sont commandés comme suit.

Une horloge 12 fournit, par l'intermédiaire d'une porte ET 13, des impulsions de cadencement du convertisseur 6, qui déterminent le rythme d'écriture dans la mémoire tampon. Ces impulsions sont également appliquées, par l'intermédiaire de la porte 13 et d'un multiplexeur 14 commandé par un circuit logique 15, à l'entrée 114 de la mémoire tampon.

La porte 13 est commandée par des premiers créneaux rectangulaires fournis par un générateur 16.

Ce signal en créneaux (forme d'onde a, figure 2) est déclenché par l'impulsions d'émission avec un certain retard et se termine lorsque la mémoire tampon est remplie. A cette effet, un compteur 18 compte, à partir du début du créneau, un nombre prédéterminé d'impulsions de l'horloge 12 (128 dans l'exemple considéré), et est alors remis à zéro, ce qui a pour effet de bloquer le générateur 16 (entrée de remise à zéro 161).

Le retard susvisé est fourni par un organe de retard 17 et réglé à une valeur de 300 $\mu$s, par exemple, qui correspond au temps de formation des échos à partir de l'impulsion d'émission.

L'information numérique correspondant au signal vidéo issu de l'amplificateur est inscrite en mémoire tampon pendant la durée du créneau a et elle sera transférée en mémoire principale pendant les blancs de celui-ci, comme on va maintenant l'expliquer.

Une horloge 19 attaque l'entrée de commande 103 de la mémoire 10 par l'intermédiaire d'un compteur 20 suivi d'un diviseur de fréquence 21. Le compteur 20 attaque directement une entrée 104 de la mémoire 10 et donne ainsi l'adresse de la colonne où doit être écrite ou lue chaque information. Sa capacité doit évidemment être égale à la longueur de la mémoire tampon (128 points dans l'exemple considéré).

A titre d'exemple, la période d'horloge est de 200 $\mu$s/128 et le diviseur 21 a un taux de division égal à 4. On applique ainsi sur l'entrée 103, les créneaux correspondant à la forme d'onde b, figure 2, de durée 50 $\mu$s.

La mémoire est agencée pour que l'écriture soit autorisée pendant les états 0 des créneaux b, la lecture pendant les états 1.

8

Le signal de sortie du diviseur 21 est également appliqué à une entrée de commande 92 du commutateur d'adresses 9, qui commute le circuit d'adressage de ligne de la mémoire 10, soit sur l'adresse d'écriture fournie par le convertisseur 8, soit sur l'adresse de lecture. Celle-ci est fournie, à l'entrée 93 du commutateur 9, par un compteur 22 dont la capacité est égale au nombre de lignes de la mémoire 10 (soit 128 dans l'exemple décrit). Ce compteur reçoit le signal $b$, si bien qu'il est incrémenté d'un pas après chaque cycle de lecture-écriture. Toutes les lignes de la mémoire 10 sont ainsi lues successivement dans l'ordre croissant.

Le signal $b$ est encore appliqué au circuit logique 15. Celui-ci reçoit par ailleurs le créneau $a$ issu du générateur 16 et est agencé, de façon connue en soi, pour détecter le premier état zéro complet du créneau $b$ qui suit la fin d'un créneau $a$. Le signal $c$ (figure 2) ainsi obtenu à la sortie 151 du circuit logique 15, commande le multiplexeur 14, de façon que celui-ci connecte l'horloge 19 à la mémoire tampon 11. La ligne inscrite dans la mémoire tampon est alors transférée dans la mémoire principale, l'ordre d'écriture en mémoire principale étant donné par le même signal $c$, appliqué à l'entrée de commande d'écriture 105.

L'écriture se fait sur la ligne dont l'adresse est donnée à l'entrée 101.

Pendant l'état zéro du signal $c$, le multiplexeur 14 connecte l'entrée 114 de la mémoire tampon à la sortie de la porte 13, ce qui permet l'écriture en mémoire tampon, de la manière déjà indiquée. En outre, l'entrée 105 ne recevant pas d'ordre d'écriture, la mémoire principale subit les lectures pendant les états 1 des créneaux b tandis que, pendant les états 0, elle peut, si elle est du type dynamique, être rafraîchie.

On voit en définitive, que la mémoire principale fonctionne en lecture-écriture alternée, les lectures et écritures successives se faisant, en général, à des adresses différentes. En effet, l'adresse d'écriture est fournie par le convertisseur 8 et change une fois par cycle d'émission, tandis que l'adresse de lecture est fournie par le compteur 22 (qui n'est pas synchronisé sur l'émission) et change, dans l'exemple considéré, cinq fois par cycle d'émission. Il est avantageux que la cadence de lecture soit plus élevée que la cadence d'écriture car, dans le cas contraire, la mémoire tampon subirait de nouvelles inscriptions avant d'être complètement vidée. En outre, comme on l'a indiqué ci-dessus, une cadence de lecture plus élevée que la cadence d'écriture est avantageuse dans certaines applications.

On a représenté en 23 un tube cathodique dont les organes de déflexion verticale et horizontale du faisceau sont reliés au compteur 22 par l'intermédiaire d'un convertisseur numérique-analogique 24 et d'un conformateur 25 ; ce dernier délivre des dents de scie à pente convenable et fonction du numéro de la ligne lue, de façon que la trajectoire du spot sur l'écran corresponde à la trajectoire du faisceau ultrason. Chaque ligne de balayage sur l'écran du tube cathodique correspond donc à une ligne d'exploration par le faisceau ultrasonore. L'électrode de commande de luminosité du tube 23 est reliée à la sortie 106 de la mémoire 10 par l'intermédiaire d'un convertisseur numérique-analogique 26.

On notera qu'il suffit d'inhiber la commande d'écriture en mémoire principale par exemple par des moyens de commutation non représentés sur la ligne reliant la sortie 151 du circuit logique 15 à l'entrée 105 de la mémoire 10 pour visualiser en permanence la même image.

On peut encore couper et établir périodiquement la commande d'écriture en mémoire principale, à une fréquence synchronisée sur un phénomène extérieur (par exemple, signal ECG) et avec un décalage lentement variable d'une période à la suivante, pour obtenir un effet stroboscopique donnant, par exemple, une image figée du coeur, observé au ralenti. Ces possibilités du dispositif permettent d'éviter la déformation cinétique de l'image due au déplacement de l'obstacle analysé par rapport à celui du faisceau d'examen et perpendiculairement à celui-ci.

Il va de soi que diverses modifications pourront être apportées au montage décrit et représenté, sans s'écarter de l'esprit de l'invention. A titre d'exemple, le registre tampon auxiliaire pourrait être remplacé par une mémoire RAM, tandis que la mémoire principale serait constituée par une mémoire à décalage adressable type LARAM.

Les applications du dispositif de mémorisation numérique indiquées ne sont pas limitatives.

Une répartition en deux parties de la mémoire principale (10) permet avantageusement de lire la mémoire simultanément à son écriture. Pour cela la partie de la mémoire non adressée en écriture peut être lue pour rafraîchir l'image sur l'écran de visualisation. On peut alors travailler en entrelacement des deux parties.

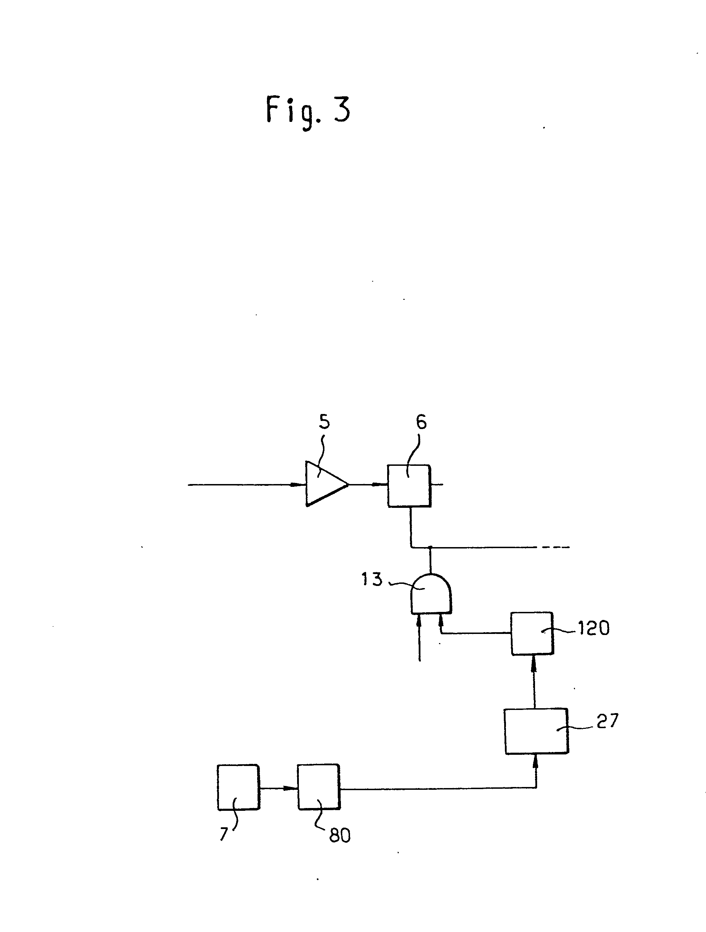

A la figure 3, on a représenté partiellement, un dispositif qui comporte tous les organes de la

11

figure 1, affectés des mêmes numéros de référence, à l'exception de l'horloge 12, qui est ici remplacée par une horloge 120 à fréquence variable.

La fréquence de l'horloge 120 est du type à verrouillage de phase et asservie au cosinus de l'angle du faisceau d'exploration. A cet effet, le détecteur 7 est relié à un convertisseur analogique-numérique 80 qui donne un signal numérique proportionnel à $\sin\theta$ et attaque un conformateur numérique sin/cos. 27 (constitué par exemple par une ROM contenant la table de conversion sin/cos.).

Si P est la profondeur explorée par un faisceau faisant un angle $\theta$ avec la verticale, le trajet aller et retour parcouru par le faisceau est 2 P/Cos $\theta$, si bien que le temps de parcours est 2P/C Cos $\theta$, C étant la vitesse des ultra-sons dans le milieu exploré. La fréquence d'horloge doit donc être, si N est le nombre de points sur chaque ligne :

$$F_4 = \frac{CN}{2P} \cos\theta$$

Lorsqu'il en est ainsi, l'information correspondant à tous les points situés à une même profondeur occupe une même colonne dans la mémoire principale.

Lors de la lecture, il est possible de travailler à fréquence d'horloge constante. On peut alors noter que la vitesse de balayage vertical du tube 23 est également constante, ce qui simplifiera l'exécution du circuit conformateur 25 et du circuit de déviation.

Grâce à cet artifice, le problème de conversion de standard est très simplifié puisque tous les points situés sur une même horizontale occupent une même colonne de la mémoire.

Les calculs de distance sont également plus rapides, puisque, à un numéro de colonne donné, il corres-

12

pond toujours la même profondeur, quelle que soit la
ligne.

13

REVENDICATIONS

1. Dispositif de traitement et de mémorisation numérique, comportant des moyens de codage d'une information acquise par un balayage par lignes successives dans un plan d'examen, échantillonnées chacune en un nombre prédéterminé de points, des moyens de mémorisation (10, 11) de la dite information, des moyens de commande et d'adressage et des moyens de visualisation (23), caractérisé en ce que les moyens de commande et d'adressage assurent un transfert par ligne de l'information des moyens d'acquisition aux moyens de mémorisation (10, 11), chaque ligne étant sélectionnée par des moyens de repérage (9) qui coopèrent avec les moyens de commande et d'adressage pour exploiter l'information vers les moyens de visualisation (23).

2. Dispositif selon la revendication 1, caractérisé en ce que les moyens de mémorisation comportent une mémoire principale (10) et une mémoire tampon (11) placée en amont de la mémoire principale et destinée à emmagasiner une ligne de l'information.

3. Dispositif selon la revendication 2, caractérisé en ce que la mémoire principale (10) est une mémoire vive à adressage relatif à un réseau bidimensionnel.

4. Dispositif selon la revendication 1, 2 ou 3, caractérisé en ce que les moyens de commande et d'adressage comportent deux voies indépendantes, l'une pour l'inscription des données dans les moyens de mémorisation à cadence fixée par la récurrence d'un générateur (1) d'impulsions destiné à moduler un émetteur (2) qui excite un transducteur ultrasonore (3) en émission, l'autre à cadence réglable pour la sortie des données des moyens de mémorisation, cette cadence étant supérieure à la cadence d'écriture afin d'obtenir une restauration permanente de l'image au cours du balayage dans un même plan d'examen.

5. Dispositif selon la revendication 4, caractérisé en ce que la voie d'inscription comporte un générateur (16) de premiers créneaux (a) dont la montée est synchronisée sur les impulsions électriques du générateur (1) à travers un organe de retard ajustable (17).

6. Dispositif selon la revendication 5, caractérisé en ce que l'information recueillie par les moyens d'acquisition est convertie en valeurs numériques par un convertisseur analogique-numérique (6) par échantillons au rythme d'un signal obtenu en sortie d'une porte ET (13) qui reçoit les premiers créneaux (a) du générateur (16) et le signal d'une horloge (12).

7. Dispositif selon la revendication 6, caractérisé en ce que les moyens d'acquisition de l'information comportent le transducteur (3), fonctionnant en réception et un amplificateur (5) de remise en forme des échos reçus.

8. Dispositif selon la revendication 5 ou 7, caractérisé en ce que les moyens d'acquisition de l'information comporte aussi des moyens (4) de réaliser un balayage, en ce que les dits moyens (4) comportent un détecteur (7) pour repérer la position angulaire de la ligne de balayage dans le plan d'examen et en ce que la valeur de sortie de ce détecteur (7) est échantillonné et numérisé au rythme des impulsions d'émission par le moyen d'un convertisseur analogique numérique (8).

9. Dispositif selon la revendication 8, caractérisé en ce que la voie d'inscription des données comporte un commutateur d'adresse (9) qui reçoit les valeurs du convertisseur (8) et sélectionne l'adresse d'écriture de la ligne de données à mémoriser dans la mémoire principale (10).

10. Dispositif selon la revendication 2, caractérisé en ce que la matrice tampon (11) est constituée par au moins un registre à décalage comportant autant de positions qu'une ligne de balayage comporte de points échantillonés et chaque position autant d'éléments binaires qu'un point en comporte.

11. Dispositif selon la revendication 2, 3 ou 10, caractérisé en ce que le transfert en série des données de la mémoire tampon (11) à la mémoire principale (10) est commandé par un multiplexeur (14) commuté en position déchargement de la mémoire (11) tampon par la sortie 151 un circuit logique 15 sur la sortie de la porte ET (13).

12. Dispositif selon la revendication 4 ou 11, caractérisé en ce que la voie de sortie des données des moyens de mémorisation comporte aussi le circuit logique (15) qui reçoit les premiers créneaux (a) du générateur (16) et les seconds créneaux (b) issues du diviseur de fréquence (21) et fournit des troisièmes créneaux (c) par sa sortie (151) au multiplexeur (14) d'une part et à l'entrée d'écriture (15) de la mémoire principale (10) d'autre part.

13. Dispositif selon la revendication 4, caractérisé en ce que la voie de sortie des données des moyens de mémorisation comporte une horloge (19), dont la sortie est commandée par le multiplexeur (14), qui fournit un signal de fréquence prédéterminée à un compteur (20) ayant une capacité égale au nombre de points échantillonnés sur chaque ligne du plan d'examen, de façon à commander d'une part une entrée (104) de la mémoire principale (10) pour donner l'adresse de la

16

colonne où doit être écrite ou lue chaque donnée, d'autre part à exciter un diviseur (21) qui commande une entrée (103) de la mémoire (10) une entrée (92) du commutateur d'adresses (9), un compteur (22) de capacité égale au nombre de lignes du plan d'examen connecté sur l'initialisation (93) du commutateur (9) et au circuit logique (15).

14. Dispositif selon la revendication 13, caractérisé en ce que le circuit logique (15) délivre sur sa sortie (151) un niveau actif pendant le premier état zéro complet des seconds créneaux (b) qui suit la fin d'un quelconque des premiers créneaux (a).

15. Dispositif selon la revendication 2, caractérisé en ce que l'écriture en mémoire tampon s'effectue à une vitesse variable en fonction de l'angle du faisceau d'exploration, de telle sorte que les informations correspondant à une même profondeur d'examen soient toujours inscrites dans une même colonne en mémoire (10) utilisée.

16. Dispositif selon la revendication 1, caractérisé en ce que la mémoire principale (10) est constituée en au moins deux parties et en ce qu'il comporte des moyens de lecture et d'écriture simultanées.

17. Dispositif selon l'une des revendications précédentes, caractérisé en ce que les moyens de visualisation comportent un tube cathodique (23) dont la luminance est modulée par la sortie d'un convertisseur numérique analogique (26) connectée à une sortie (105) des données de la mémoire principale (10) et dont les commandes de déviation sont élaborées de façon connue en soi par un conformateur (25) qui reçoit un signal d'un convertisseur numérique analogique (24) connecté à la sortie du compteur (22) des lignes du plan d'examen.

17

18. Echographe caractérisé en ce qu'il comporte un dispositif de traitement et de mémorisation numérique selon l'une quelconque des revendications précédentes.

19. Echographe selon la revendication 18, caractérisé en ce qu'il comporte des moyens de commutation sur la sortie (151) du circuit logique (15) pour inhiber la commande d'écriture en mémoire principale, afin de fixer l'image visualisée.

20. Echographe selon la revendication 19, caractérisé en ce qu'il comporte des moyens de synchronisation des moyens de commutation pour inhiber la commande d'écriture en mémoire principale (10) afin de réaliser une visualisation convenable d'une image d'organes en mouvements.

Fig.1

Fig.2

Fig. 3

0037302

| Catégorie | Citation du document avec indication, en cas de besoin, des parties pertinentes | Revendication concernée |
|---|---|---|
| X | EP - A - 0 002 061 (GENERAL ELEC-TRIC CO.)<br><br>* Page de garde: le résumé; page 1, lignes 1-8; page 3, lignes 2-9 et 26-32; page 8, ligne 1 - page 15, ligne 7; les figures *<br><br>-- | 1-8,10-18 |
| | FR - A - 2 148 348 (HUGHES AIR-CRAFT CO.)<br><br>* Page 1, lignes 1-14; page 2, ligne 9 - page 3, ligne 15; page 6, ligne 7 - page 8, ligne 26; page 11, lignes 17-25; page 17, ligne 7 - page 26, ligne 8; page 43, ligne 20 - page 48, ligne 6; les figures *<br><br>& US - A - 3 810 174<br><br>-- | 1-4,6,<br>8-13,<br>17 |
| | FR - A - 2 341 141 (HOLLANDSE SIGNAALAPPARATEN)<br><br>* Page 1, lignes 1-22; page 9, ligne 1 - page 14, ligne 15; les figures *<br><br>-- | 1-4,17 |
| | PROCEEDINGS OF THE SOCIETY FOR INFORMATION DISPLAY, vol. 17, no. 3, 1976<br>Los Angeles, US<br>G.K. SLOCUM et al.: "Digital Scan Converters in Airborne Display Systems", pages 147-158<br><br>* Figures 3 et 10 *<br><br>-- | 1,17 |

./.

**DOCUMENTS CONSIDERES COMME PERTINENTS**

**CLASSEMENT DE LA DEMANDE (Int. Cl.³)**

G 01 S 7/62
G 06 F 13/00

**DOMAINES TECHNIQUES RECHERCHES (Int. Cl.³)**

G 01 S 7/06
7/30
7/52
7/62
15/89
G 06 F 13/00
H 04 N 5/02

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 22-06-1981 | OLDROYD |

OEB Form 1503.1 06.78

**Office européen des brevets**

**RAPPORT DE RECHERCHE EUROPEENNE**

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendica-tion concernée | |
| A | FR - A - 2 253 239 (HUGHES AIR-CRAFT CO.)<br><br>* En entier *<br><br>-- | | |
| A | FR - A - 2 310 608 (HOFFMANN-LA ROCHE)<br><br>* En entier *<br><br>-- | | |
| D | FR - A - 2 410 287 (CGR ULTRA-SONIC)<br><br>* En entier *<br><br>---- | | **DOMAINES TECHNIQUES RECHERCHES (Int. Cl. 3)** |